# DEMANDE DE BREVET EUROPEEN

(11) **EP 0 645 551 A1**
(43) Date de publication de la demande: **29.03.1995**
(21) Numéro de dépôt: 94402099.9
(22) Date de dépôt: 21.09.1994
(51) Int. Cl.: F16D 65/54

(54) **Frein à disque à montage coulissant**

(30) Priorité: 21.09.1993 FR 9311205
(71) Demandeur: SIME INDUSTRIE, F-18150 La Guerche sur l'Aubois (FR)
(72) Inventeur: Eon, Christian, F-58640 Coulanges Les Nevers (FR); Carneau, Laurent, F-18150 La Guerche Sur L'Aubois (FR)
(74) Mandataire: CABINET BONNET-THIRION

(57) **Abrégé**

Il s'agit d'un frein du genre comportant un disque (11) monté rotatif, deux patins de freinage (12A, 12B) disposés de part et d'autre de ce disque (11), un étrier (14) qui, engagé sur l'ensemble, est monté coulissant sur au moins une colonne de support (15), et qui, pour action sur l'un des patins de freinage (12A, 12B), comporte, au droit de celui-ci, un bloc de commande (16).

Suivant l'invention, entre l'étrier (14) et la colonne de support (15), interviennent axialement des moyens de centrage (40).

Application, notamment, aux freins à manque d'énergie, en particulier pour l'industrie.

## Description

La présente invention concerne d'une manière générale les freins du genre comportant un disque monté rotatif, deux patins de freinage disposés chacun respectivement de part et d'autre de ce disque, et un étrier qui, engagé sur l'ensemble, est monté coulissant sur au moins une colonne de support allongée sensiblement parallèlement à l'axe de rotation du disque, et qui, pour action sur l'un des patins de freinage, comporte, au droit de celui-ci, un bloc de commande.

Les freins à disque de ce genre trouvent par exemple leur application dans l'industrie.

Le montage coulissant de leur étrier permet avantageusement un recentrage de cet étrier après chaque serrage.

Mais, à ce jour, ce recentrage intervient de manière passive, sous les seuls effets du voile que présente inévitablement le disque.

Il est donc approximatif et implique un frottement plus ou moins permanent du disque sur les patins de freinage au risque d'une usure prématurée de leurs garnitures de frottement.

La présente invention a d'une manière générale pour objet une disposition permettant d'éviter ces inconvénients.

De manière plus précise, elle a pour objet un frein à disque du genre concerné caractérisé en ce que, entre son étrier et la ou les colonnes de support de celui-ci, interviennent axialement des moyens de centrage.

Par exemple, ces moyens de centrage comportent, d'une part, une bague axialement rigide qui, liée axialement en translation, avec un jeu, à l'un quelconque des éléments que constituent l'étrier et une colonne de support, est en prise à friction avec l'autre de ceux-ci, et, d'autre part, des moyens élastiques qui, prenant appui sur la colonne de support, portent axialement sur l'étrier.

En variante, ils comportent une bague axialement élastiquement compressible, qui, liée axialement à l'un quelconque des éléments que constituent l'étrier et une colonne de support, est en prise à friction avec l'autre de ceux-ci.

Quoi qu'il en soit, les moyens de centrage ainsi mis en oeuvre interviennent avantageusement de manière systématique à chaque serrage.

En effet, un serrage impliquant par réaction un déplacement axial de l'étrier, il en résulte temporairement une mise en compression des moyens élastiques que comportent ces moyens de centrage, puis, le cas échéant, un déplacement axial de leur bague au fur et à mesure de l'usure des garnitures de frottement des patins de freinage, et, au desserrage, ces moyens élastiques provoquent, en retour, un déplacement axial de l'étrier de sens opposé au précédent, jusqu'à butée contre la bague.

Par construction, il est fait en sorte que la course axiale de l'étrier soit sensiblement égale à la moitié de l'ouverture totale du frein, lors de son desserrage, pour que cette ouverture se répartisse par moitié de part et d'autre du disque.

Grâce au centrage ainsi assuré, tout frottement permanent du disque sur les patins de freinage peut être avantageusement évité, au bénéfice de la longévité de leurs garnitures de frottement.

Les caractéristiques et avantages de l'invention ressortiront d'ailleurs de la description qui va suivre, à titre d'exemple, en référence aux dessins schématiques annexés sur lesquels :
la figure 1 est, suivant la ligne brisée I-I de la figure 2, une vue en coupe axiale du frein à disque suivant l'invention, pour la configuration de desserrage de celui-ci ;
la figure 2 en est, avec un arrachement local, une vue en élévation-coupe, suivant la ligne II-II de la figure 1 ;
la figure 3 en est, avec un arrachement local, une vue partielle en élévation, suivant la flèche III de la figure 1 ;
la figure 4 en est, avec un arrachement local, une vue partielle de côté, suivant la flèche IV de la figure 2 ;
la figure 5 reprend, à échelle supérieure, le détail de la figure 1 repéré par un encart V sur cette figure 1, et correspond donc à la configuration de desserrage du frein ;
les figures 6A, 6B sont des vues qui, analogues à celle de la figure 5, se rapportent chacune respectivement à deux phases successives du serrage du frein ;
la figure 7 est une vue partielle analogue à celle de la figure 5, pour une variante de réalisation ;
la figure 8 est une vue partielle en coupe axiale, qui, reprenant pour partie celle de la figure 1, se rapporte à une autre variante de réalisation.

Ces figures illustrent, à titre d'exemple, l'application de l'invention à un frein 10 du type à manque d'énergie.

De manière connue en soi, ce frein 10 comporte, globalement, un disque 11, qui est monté rotatif, et qui, en pratique, est calé en rotation sur un arbre à freiner, non représenté, deux patins de freinage 12A, 12B, qui sont disposés chacun respectivement de part et d'autre du disque 11, et un étrier 14, qui, engagé sur l'ensemble, est monté coulissant sur au moins une colonne de support 15 allongée sensiblement parallèlement à l'axe de rotation, non visible sur les figures, du disque 11, et qui, pour action sur l'un des patins de freinage 12A, 12B, en l'espèce le patin de freinage 12A, comporte, au droit de celui-ci, suivant des dispositions décrites plus en détail ultérieurement, un bloc de commande 16.

Pour une simplification des figures, le disque 11 n'a été représenté que partiellement sur celles-ci, par son seul contour, en traits interrompus.

De manière connue en soi, les patins de freinage 12A, 12B comportent chacun une plaquette de support 17A, 17B, et, solidaire de celle-ci du côté du disque 11, une garniture de frottement 18A, 18B.

Dans les formes de réalisation représentées, l'étrier 14 est en forme générale de U, et il s'étend globalement suivant un rayon du disque 11.

En outre, dans ces formes de réalisation, l'étrier 14 est en deux parties, à savoir, du côté du patin de freinage 12A, une partie 14A, qui comporte le bloc de commande 16, et, du côté du patin de freinage 12B, pour transfert à celui-ci de l'effort développé au serrage par le bloc de commande 16, une partie 14B.

La partie 14A est rapportée sur la partie 14B par des vis 18, qui, dans les formes de réalisation représentées, sont au nombre de quatre.

Dans les formes de réalisation représentées, deux colonnes de support 15 sont prévues, parallèlement l'une à l'autre, à distance l'une de l'autre.

En pratique, ces colonnes de support 15 sont solidaires d'un quelconque bâti 19.

Il s'agit donc de colonnes de support globalement fixes.

Dans les formes de réalisation représentées, elles sont chacune formées, d'une part, d'un tirant fileté 20, qui est en prise à vissage avec le bâti 19, et, d'autre part, d'une douille 21, qui, formant entretoise, entoure le tirant fileté 20 sur toute sa hauteur entre le bâti 19 et une rondelle 22 passée sous sa tête 23.

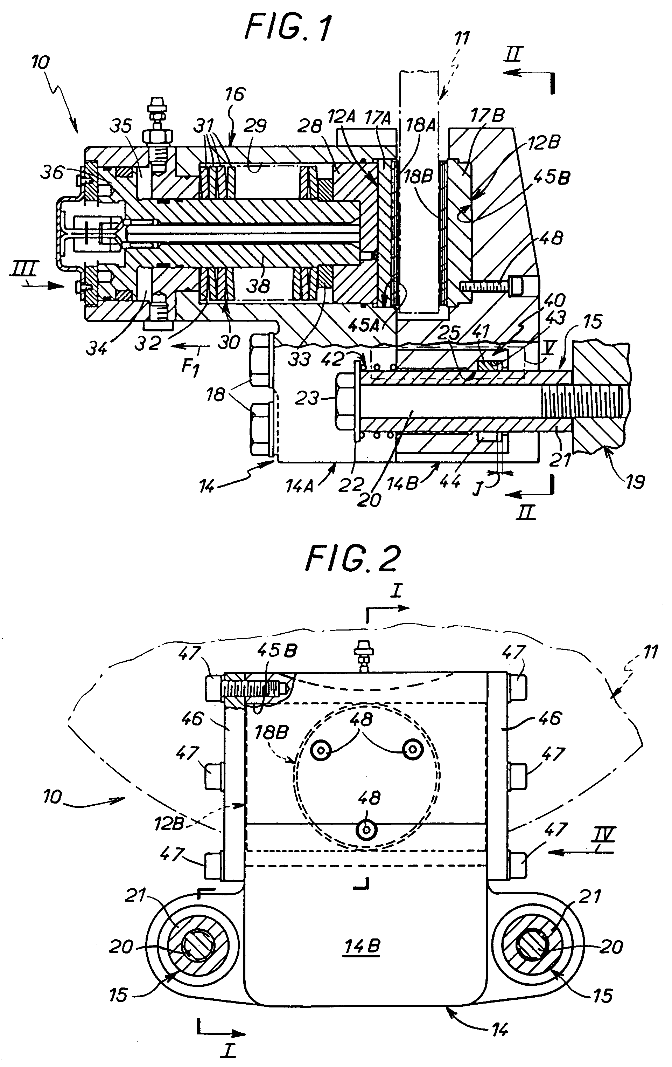

Dans les formes de réalisation plus particulièrement représentées sur les figures 1 à 7, la douille 21 des colonnes de support 15 ainsi constituées porte directement par sa tranche sur le bâti 19 à l'une de ses extrémités, perpendiculairement à la face correspondante de ce bâti 19.

Pour le montage coulissant de l'étrier 14 sur les colonnes de support 15, la partie 14B de cet étrier 14 forme latéralement deux oreilles 24 qui, par un perçage 25, sont chacune respectivement engagées sur ces colonnes de support 15 avec le jeu de montage juste suffisant pour permettre le coulissement recherché.

Sur une partie au moins de la longueur du perçage 25 peut intervenir, si désiré, et comme représenté, entre ce perçage 25 et la colonne de support 15 correspondante, un coussinet 26.

Pour action sur le patin de freinage 12A, le bloc de commande 16 comporte un élément mobile 28, qui forme piston dans un alésage 29.

S'agissant d'un frein à manque d'énergie, cet élément mobile 28 est soumis à des moyens de serrage 30 qui le sollicitent en permanence en direction du patin de freinage 12A, et, donc, du disque 11.

Dans les formes de réalisation représentées, ces moyens de serrage 30 comportent un empilage de rondelles Belleville 31 qui, prenant appui sur un épaulement interne 32 du bloc de commande 16, portent sur l'élément mobile 28 par l'intermédiaire d'une rondelle 33.

L'élément mobile 28 du bloc de commande 16 est par ailleurs soumis à des moyens de desserrage 34.

Dans les formes de réalisation représentées, il s'agit d'un vérin hydraulique, dont la chambre 35, incorporée au bloc de commande 16, intervient de l'autre côté de l'épaulement interne 32 de celui-ci par rapport aux moyens de serrage 30, et dont le piston 36 est attelé à l'élément mobile 28 par un tirant 38 traversant axialement ces moyens de serrage 30.

Les dispositions qui précèdent sont bien connues par elles-mêmes, et, ne relevant pas en propre de la présente invention, elles ne seront pas décrites plus en détail ici.

Suivant l'invention, entre l'étrier 14 et l'une au moins des colonnes de support 15, et en pratique entre l'étrier 14 et chacune de ces colonnes de support 15, interviennent, axialement, des moyens de centrage 40.

Dans les formes de réalisation représentées sur les figures 1 à 7, ces moyens de centrage comportent, d'une part, une bague 41, axialement rigide, qui, liée axialement en translation, avec un jeu J, et suivant des modalités décrites plus en détail ultérieurement, à l'un quelconque des éléments que constituent l'étrier 14 et la colonne de support 15 concernée, est en prise à friction avec l'autre de ces éléments, et, d'autre part, des moyens élastiques 42, qui, prenant appui sur la colonne de support 15, portent axialement sur l'étrier 14.

Dans la forme de réalisation plus particulièrement représentée sur les figures 1 à 6, la bague 41 est liée axialement avec le jeu J à l'étrier 14, et elle est serrée à friction sur la colonne de support 15.

Par exemple, et tel que représenté, elle est engagée radialement dans une gorge 43 que présente en creux sur son perçage 25 l'oreille 24 correspondante de la partie 14B de l'étrier 14, en présentant axialement une longueur L1 inférieure du jeu J par rapport à la longueur axiale L2 de cette gorge 43.

Pour permettre sa mise en place, la bague 41 est dans ce cas une bague ouverte localement par une fente 44, figure 1.

Au montage, cette fente 44 permet de la rétreindre radialement de manière suffisante pour qu'elle puisse être engagée dans le perçage 25 jusqu'à venir au droit de la gorge 43.

Par élasticité, elle reprend ensuite sa configuration initiale.

Mais, pour celle-ci, elle présente, intérieurement, par construction, un diamètre inférieur au diamètre extérieur de la colonne de support 15.

Ainsi, elle se serre sur cette colonne de support 15 lorsque l'étrier 14 est engagé sur celle-ci.

Pour faciliter l'engagement correspondant, l'arête concernée de la bague 41 et/ou celle de la douille 21 de la colonne de support 15 peuvent avantageusement être abattues par un chanfrein.

Quoi qu'il en soit, il subsiste inévitablement un jeu radial J' entre la bague 41 et le fond de la gorge 43 dans laquelle elle intervient.

La bague 41 ainsi mise en oeuvre est par exemple en acier à ressort.

Malgré son serrage sur la colonne de support 15, elle peut librement coulisser sur celle-ci si la force de friction correspondante est surmontée.

Corollairement, les moyens élastiques 42 sont constitués, dans la forme de réalisation représentée, par un simple ressort de compression, et, plus précisément, par un simple ressort du type ressort à boudin, qui, entourant la colonne de support 15 du côté du bloc de commande 16, est inséré axialement entre la rondelle 22 glissée sous la tête 23 du tirant fileté 20 et l'oreille 24 de la partie 14B de l'étrier 14.

Par construction, il est fait en sorte que, rapportée à l'axe de la colonne de support 15, la force de friction de la bague 41 sur l'élément avec lequel elle est en prise, en l'espèce cette colonne de support 15, soit supérieure à la force de rappel des moyens élastiques 42 associés.

Suivant l'invention, d'un côté au moins du disque 11, et, en pratique, de chaque côté de celui-ci, les patins de freinage 12A, 12B sont chacun respectivement disposés dans des logements 45A, 45B de l'étrier 14, qui débouchent latéralement sur l'un au moins des flancs de cet étrier 14, et qui, sur ce flanc, y sont chacun fermés par une traverse 46 amovible.

Dans la forme de réalisation représentée, il est prévu une traverse 46 sur chacun des flancs de l'étrier 14, pour chacun des logements 45A, 45B, ces logements 45A, 45B traversant de part en part l'étrier 14 à la manière de rainures à bords parallèles, et cette traverse 46 est solidarisée de manière amovible à l'étrier 14 par des vis 47.

Par exemple, trois vis 47 sont ainsi mises en oeuvre pour chacune des traverses 46.

En pratique, les plaquettes de support 17A, 17B des patins de freinage 12A, 12B ont en plan un contour rectangulaire, avec une largeur complémentaire de celle des logements 45A, 45B dans lesquels elles interviennent.

Les garnitures de frottement 18A, 18B associées ont en plan un contour de même type.

Elles sont par exemple collées sur les plaquettes de support 17A, 17B.

Dans la forme de réalisation représentée, le patin de freinage 12B se trouve assujetti à l'étrier 14 à l'aide de vis 48 intervenant au dos de la partie 14B de l'étrier 14.

Ces vis 48, qui sont au nombre de trois dans la forme de réalisation représentée, ne sont en fait pas obligatoires.

Les logements 45A, 45B assurent le maintien des patins de freinage 12A, 12B, et, lors d'un serrage du frein 10, les traverses 46 encaissent par leur intermédiaire l'effort de freinage correspondant.

Pour la configuration de desserrage du frein 10 représenté sur les figures 1 à 5, le jeu J associé à la bague 41 s'étend axialement du côté de cette bague 41 opposé au bloc de commande 16.

Par construction, il est fait en sorte que le jeu J ainsi associé à la bague 41 soit sensiblement égal à la moitié de l'ouverture totale du frein 10 lors de son desserrage, c'est-à-dire à la moitié de la course de l'élément mobile 28 du bloc de commande 16 lors d'un tel desserrage de ce frein 10.

Pour un serrage du frein 10, la pression dans la chambre 35 du vérin hydraulique constituant les moyens de desserrage 34 est annulée.

Ainsi libérés, les moyens de serrage 30, jusque-là retenus par l'élément mobile 28, viennent appliquer contre le disque 11 le patin de freinage 12A, d'un premier côté de celui-ci, par l'intermédiaire de cet élément mobile 28.

Par réaction, le bloc de commande 16 s'écarte axialement du disque 11, et, entraîné par lui suivant la flèche F1 des figures 1 et 5, l'étrier 14 vient appliquer par sa partie 14B le patin de freinage 12B contre le disque 11 de l'autre côté de celui-ci.

Le disque 11 est ainsi serré par les patins de freinage 12A, 12B, et donc freiné, éventuellement jusqu'à l'arrêt.

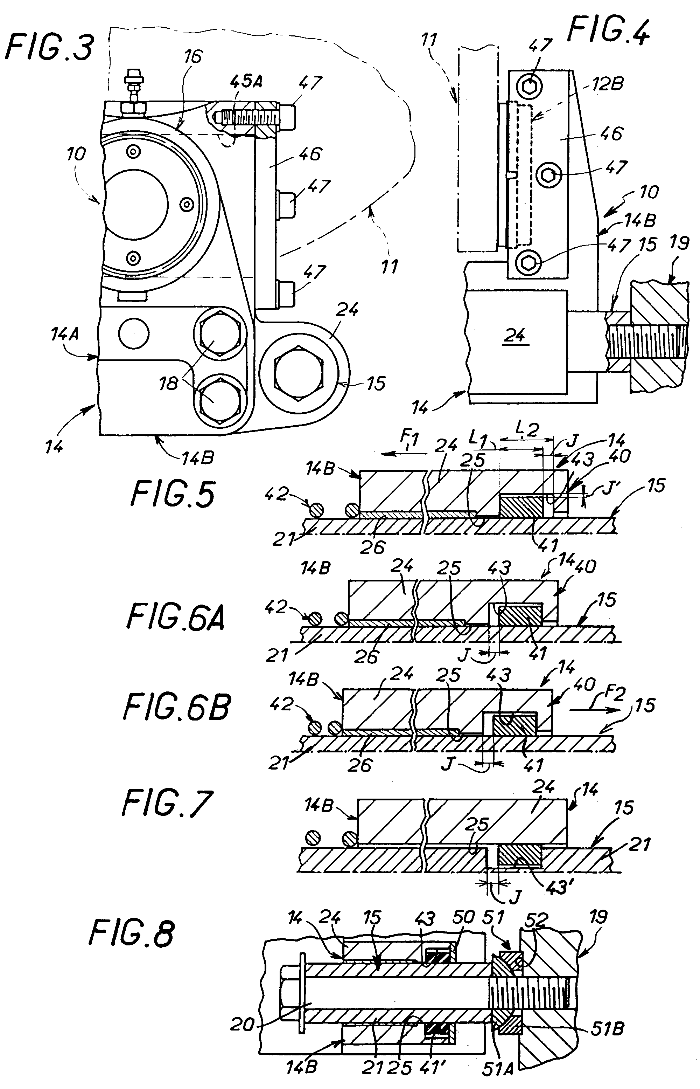

Dans un premier temps, figure 6A, le jeu J des moyens de centrage 40 est absorbé.

Dans un deuxième temps, figure 6B, la bague 41 est entraînée à friction, au fur et à mesure de l'usure des garnitures de frottement 18A, 18B des patins de freinage 12A, 12B.

Pour le desserrage du frein 10, la pression dans la chambre 35 des moyens de desserrage 34 est rétablie.

Dûment entraîné par le piston 36 du vérin hydraulique constituant ces moyens de desserrage 34, l'élément mobile 28 du bloc de commande 16 comprime à nouveau les moyens de serrage 30.

N'étant plus serré par les patins de freinage 12A, 12B, le disque 11 est libéré.

Conjointement, sous la sollicitation des moyens élastiques 42, l'étrier 14 se déplace axialement dans le sens opposé au précédent, suivant la flèche F2 de la figure 6B.

Après absorption du jeu J, il vient porter contre la bague 41 des moyens de centrage 40.

La force de friction de cette bague 41 sur la colonne de support 15 étant supérieure à la force de rappel des moyens élastiques 42, l'étrier 14 demeure alors en butée contre cette bague 41.

Le jeu J étant sensiblement égal à la moitié de la course de l'élément mobile 28 du bloc de commande 16 au desserrage, c'est-à-dire à la moitié de l'ouverture totale du frein 10 lors d'un tel desserrage, cette ouverture se répartit par moitié de part et d'autre du disque 11.

Le disque 11 est donc ainsi libéré sans frottement résiduel.

Pour le cas, cependant, où, du côté du patin de freinage 12B par exemple, le voile du disque 11 serait supérieur au déplacement dans ce sens de l'étrier 14 lors d'un desserrage, et, donc, au jeu J, l'étrier 14 peut encore coulisser sur les colonnes de support 15 sous la sollicitation du disque 11 à travers le patin de freinage 12B, en entraînant alors avec lui à friction la bague 41 des moyens de centrage 40.

Pour une dépose éventuelle des patins de freinage 12A, 12B, en vue par exemple de leur changement, le frein 10 est ouvert, d'est-à-dire desserré, par envoi de pression dans la chambre 35, et il peut alors très simplement être procédé au retrait de l'une et/ou de l'autre des traverses 46, en raison d'une par côté.

En variante, il peut être procédé au retrait de l'une des colonnes de support 15, puis à un pivotement suffisant de l'étrier 14 autour de l'autre de celles-ci pour que l'ensemble échappe au disque 11 et qu'un accès soit ainsi donné aux patins de freinage 12A, 12B.

Dans la variante de réalisation représentée sur la figure 7, la bague 41, qui, comme précédemment, est une bague axialement rigide, est, suivant une disposition inverse de la précédente, liée axialement en translation, avec un jeu J, à la colonne de support 15 à laquelle elle est associée, en étant à cet effet engagée radialement dans une gorge 43' prévue à cet effet en creux à la surface extérieure de la douille 21 de cette colonne de support 15, cependant que, conjointement, elle est en prise à friction avec l'étrier 14, en se trouvant pour ce faire serrée à friction dans le perçage 25 de l'oreille 24 correspondante de la partie 14B de cet étrier 14.

Pour le reste, les dispositions sont du même type que les précédentes.

Il en est de même du fonctionnement.

Dans la variante de réalisation représentée sur la figure 8, les moyens de centrage 40 comportent une bague 41', axialement élastiquement compressible, qui, liée axialement à l'un quelconque des éléments que constituent l'étrier 14 et la colonne de support 15 concernée, est en prise à friction avec l'autre de ceux-ci.

En pratique, dans la forme de réalisation représentée, la bague 41' est logée dans une gorge 43 que présente en creux le perçage 25 de l'oreille 24 concernée de la partie 14B de l'étrier 14, cependant qu'elle est serrée à friction sur la colonne de support 15.

Il s'agit en pratique d'une bague en matière élastique, tel qu'un élastomère par exemple, circulairement continue.

Elle s'étend axialement de l'une à l'autre des extrémités de la gorge 43 de l'étrier 14, et, pour son montage dans celle-ci, cette gorge 43 débouche axialement, tout en étant fermée par une rondelle 50 dûment rapportée, par exemple par des vis non représentées, sur l'oreille 24.

Ainsi qu'il est aisé de le comprendre, la bague 41' constitue dans ce cas conjointement par elle-même les moyens élastiques 42 associés.

Autrement dit, c'est de sa seule compressibilité que résulte au desserrage le rappel de l'étrier 14.

Par ailleurs, dans la forme de réalisation représentée, l'une au moins des colonnes de support 15, et, par exemple, chacune de celles-ci, est montée de manière rotulaire sur le bâti 19.

Par exemple, et tel que représenté, il est interposé, axialement, pour ce faire, entre la douille 21 et le bâti 19, les deux parties mâle 51A et femelle 51B d'une rotule 51 annulaire entourant à sa base le tirant fileté 20.

Préférentiellement, l'appui de la rotule 51 sur le bâti 19 se fait à la faveur d'un simple lamage 52 de celui-ci.

Il est ainsi avantageusement obtenu une grande simplicité de montage.

Quoi qu'il en soit, grâce au montage rotulaire mis en oeuvre, il est corollairement avantageusement obtenu un auto-alignement des deux colonnes de support 15 par rapport au disque 11, l'inévitable jeu existant entre le tirant fileté 20 de celles-ci et leur douille 21 étant en effet suffisant pour accepter des écarts de quelques millimètres entre elles.

Bien entendu, la présente invention ne se limite pas aux formes de réalisation décrites et représentées, mais englobe toute variante d'exécution et/ou de combinaison de leurs divers éléments.

En particulier, au lieu d'être hydrauliques, les moyens de desserrage mis en oeuvre pourraient tout aussi bien être électriques ou électromagnétiques par exemple.

En outre, l'application de l'invention ne se limite pas aux seuls freins à manque d'énergie.

Elle s'étend au contraire tout aussi bien aux freins à émission d'énergie.

## Revendications

1. Frein industriel du genre comportant en association avec un disque rotatif (11) deux patins de freinage (12A, 12B) dans un étrier (14) monté coulissant sur au moins une colonne fixe de support (15) avec un dispositif de commande (16) adapté à maintenir les freins dans l'un ou l'autre de deux états respectivement fermé et ouvert, caractérisé par l'aménagement entre les deux éléments que constituent l'étrier (14) et la colonne (15) d'un moyen de centrage (40) comportant une bague de butée (41, 41') liée axialement à l'un quelconque de ces deux éléments de manière à autoriser entre ces éléments un débattement dans les limites d'un jeu prédéterminé à l'encontre d'un moyen élastique de rappel.

2. Frein selon la revendication 1, caractérisé par une bague de butée (41) axialement rigide en prise à friction avec l'élément auquel il est lié.

3. Frein selon la revendication 2, caractérisé en ce que la bague (41) est en acier à ressort.

4. Frein selon la revendication 1, caractérisé par une bague (41') compressible élastiquement en sens axial en prise à friction avec l'élément auquel il est lié.

5. Frein selon la revendication 4, caractérisé en ce que la bague (41') est en matière élastique.

6. Frein selon l'une quelconque des revendications 2, 3, caractérisé en ce que, le bloc de commande (16) comportant un élément mobile (28) pour son action sur un patin de freinage (12A, 12B), le jeu (J) associé à la bague (41) est sensiblement égal à la moitié de la course de cet élément mobile (28) au desserrage.

7. Frein suivant l'une quelconque des revendications 2 à 6, caractérisé en ce que la bague (41, 41') est liée axialement à l'étrier (14) et elle est serrée à friction sur la colonne de support (15).

8. Frein suivant l'une quelconque des revendications 1 à 7, caractérisé en ce que, l'étrier (14) étant monté coulissant sur deux colonnes de support (15) rapportées parallèlement l'une à l'autre sur un bâti (19), l'une au moins de ces colonnes de support (15) est montée de manière rotulaire sur ce bâti (19).

9. Frein selon l'une quelconque des revendications 1 à 8, caractérisé en ce que, d'un côté au moins du disque (11), le patin de freinage (12A, 12B) est disposé dans un logement (45A, 45B) de l'étrier (14) qui débouche latéralement sur l'un au moins des flancs de cet étrier (14) et qui y est fermé par une traverse (46) amovible.
